# EUROPEAN PATENT SPECIFICATION

(11) **EP 3 108 023 B1**
(45) Date of publication and mention of the grant of the patent: **06.03.2019**
(21) Application number: 15704543.6
(22) Date of filing: 13.02.2015
(51) Int. Cl.: C22B 7/00, C22B 7/02, C22B 3/00, C22B 19/00

(54) **PROCESS FOR REDUCING THE AMOUNTS OF ZINC (ZN) AND LEAD (PB) IN MATERIALS CONTAINING IRON (FE)**
VERFAHREN ZUR VERMINDERUNG DER MENGEN VON ZINK (ZN) UND BLEI (PB) IN MATERIALIEN MIT EISEN (FE)
PROCÉDÉ POUR RÉDUIRE LES QUANTITÉS DE ZINC (ZN) ET DE PLOMB (PB) DANS DES MATÉRIAUX CONTENANT DU FER (FE)

(30) Priority: 18.02.2014 LU 92379
(43) Date of publication of application: 28.12.2016
(73) Proprietor: Paul Wurth S.A., 1122 Luxembourg (LU)
(72) Inventor: PIEZANOWSKI, Ludivine, 4067 Esch-sur-Alzette (LU); HUGENTOBLER, Jasmin, 4930 Bascharage (LU); RAYNAL, Samuel, 6791 Athus (BE); HOUBART, Michel, 4540 Amay (BE)
(74) Representative: Office Freylinger
(86) International application number: PCT/EP2015/053113
(87) International publication number: WO 2015/124507

(56) References cited:
- EP-A1- 0 244 910
- BE-A7- 1 000 323
- US-A- 4 018 680
- LANGOVA S ET AL: "Selective leaching of zinc from zinc ferrite with hydrochloric acid", HYDROMETALLURGY, ELSEVIER SCIENTIFIC PUBLISHING CY. AMSTERDAM, NL, vol. 95, no. 3-4, 1 February 2009 (2009-02-01), pages 179-182, XP025746015, ISSN: 0304-386X, DOI: 10.1016/J.HYDROMET.2008.05.040 [retrieved on 2008-07-07]

## Description

### Technical field

The present invention generally relates to the treatment of starting materials comprising iron (Fe), zinc (Zn), lead (Pb) and possibly carbon (C) by hydrometallurgy process and in particular to the removal of Zn and Pb from these starting materials.

### Background Art

The chemical and metallurgical industries generate various forms of wastes containing pollutant elements. For example, the steel making industry involves the use of blast furnace for smelting in order to produce industrial metals such as pig iron and the use of basic oxygen furnace (BOF) in order to produce steel from pig iron. Blast furnace and BOF in operation produces a lot of dusts and sludge at the outlet of the gas cleaning plant. These sludge or dusts are composed of different metals. In particular, these sludge or dusts comprise iron, carbon, zinc and lead. In order to reduce the operating cost linked to the operations of such industries, it is desirable to recycle these materials in order to recover the valuable element namely carbon (C) and iron (Fe).

Although these sludges (or dusts) comprise iron and carbon, which could be recycled to recover contained metals, the presence of zinc and lead prevents the reuse of these sludge or dusts. Indeed, the content of zinc may be for example around 0,1 to 6 wt-% and may reach 15 wt-% or even more. The content of lead is generally lower, such as from 0,04 to 3,5 wt-%. In particular for steel making industries, zinc and lead are considered as a poison. It is thus impossible to recycle directly these materials without affecting the blast furnace operation. Thus, the sludges (or dusts) comprising zinc and lead cannot be recycled to the sinter plant in order to be retreated by the blast furnace.

As a result, the sludges (or the dusts) are currently dumped inside or outside the site area. However, this constitutes a major environmental and economic problem.

Indeed, the storage of this kind of materials can be detrimental for the environment since the contaminants can affect the surrounding soils or ground waters. This may be a real threat for the health and more specifically for the fauna and flora. Specific and costly dumping areas have to be implemented in order to avoid leaching of heavy metals and pollution of the ground water.

Furthermore, even from an economic point of view, the dumping of these materials cannot be regarded as an advantageous solution. Indeed, the available place for internal dumping in plant area decreases whereas the costs linked to the external dumping increase.

Several attempts for recycling blast furnace sludge or dusts have been developed during the past. In particular, the known processes (for example described in BE1000323 and LU87535) involved the use of a pickling line acid and hydrochloric acid. These processes include a leaching step of zinc and lead residues with the oxidized pickling line acid and the hydrochloric acid. This kind of treatment results in the precipitation of iron under goethite form, the cementation of lead with iron II form (Fe²⁺) and the precipitation of zinc under hydroxide or sulfide form.

However, this type of process shows several drawbacks. One of the main drawbacks is that it relies on the availability of a picking line acid in the steel plant. Indeed, not all of the steel plants have picking line acid. Pickling line acid may only be found in steel plants which produce flat products. Thus, this type of process is limited to only specific steel plants. Another drawback is the oxidation of Fe II to Fe III in the pickling line for the goethite precipitation. In the given flow sheet, goethite has to be precipitated in order to recover the valuable iron contained in the pickling line. But, the kinetics of oxidation of iron, in acidic condition and in high chloride media, are very slow. Thus it would require very strong oxidizing agents such as Cl₂, H₂O₂, ... to use the reaction industrially. Such a reaction would thus require costly equipment to handle such oxidizing agents.

Furthermore, nowadays when pickling line acid is produced, it is recycled in order to recover HCl (which is sent back to the pickling line) and iron under oxide form. The iron oxide produced in such recycling process is very pure and fine and it is sold as valuable raw material for ferrite and pigment market.

As a result, the processes involving pickling line acid cannot be applied to every kind of plants and furthermore are not economically interesting.

A further process to separate non-ferrous metals such as Zn and Pb from Fe containing materials has been disclosed in EP0244910A1, wherein in a first step an aqueous slurry of the material is agitated under O₂ atmosphere at pressures of 8-12 kg/cm² and at a temperature of at least 110 °C and then in a second step a HCl containing reagent is added to treat the material at a pH of 2.6 to 3 under O₂ atmosphere at pressures of 8-12 kg/cm² and at a temperature of at least 110 °C for at least 30 min. In a third step the product from the previous step while still hot is filtered to separate the Fe containing solids from the Zn and Pb containing filtrate.

Working under high pressure and temperature as described in this document is however economically and operatively not preferred for industrial applications as it requires pressure vessels made out of costly high grade material and involves higher safety requirements.

More generally, there is no satisfying and profitable process resulting in the selective removal of zinc and lead from a starting material matrix comprising iron.

### Technical problem

It is an object of the present invention to provide an efficient and easy to implement process which allows selectively separating and reducing the zinc and lead amounts from starting materials comprising iron (and possibly carbon) without using expensive reagents.

### General Description of the Invention

In order to overcome the above-mentioned problem, the present invention provides a process for reducing the amounts of zinc (Zn) and lead (Pb) in starting materials comprising iron (Fe) (and possibly carbon (C)), which comprises the steps of:
a) selectively leaching Zn and Pb comprised in the starting materials by mixing the starting materials with hydrochloric acid (HCl) and an oxidizing agent in one or several reactor(s) at a temperature superior or equal to 35°C and at a pH comprised between 0,5 and 3,5,
b) filtrating the mixture obtained in order to separate the solid (namely the Fe by-product) and the filtrate,
c) washing the solid with water, the resulting solid comprising Fe, (possibly C) and a reduced amount of Zn and Pb compared to the original starting materials (namely before the treatment),
d) recovering the filtrate of step b) and the washing water of step c) which comprise chloride and solubilized Zn and Pb, in one or several reactor(s),
e) precipitating solubilized Zn and Pb in the recovered filtrate and the washing water by mixing with a neutralizing agent (in order to obtain solid residues),
f) filtrating and washing the solid residues obtained in step e) in order to separate (to remove) the chloride in solution (corresponding to a salty liquid effluent) from the solid residues which comprise at least Pb and Zn (namely the Zn by-product) .

In the process of the present invention, the oxidizing agent of step a) comprises at least 5 wt-% of manganese dioxide (MnO₂), preferably in combination with one or more further oxidizing agents. Furthermore, all the steps of the process can be done under atmospheric pressure.

The process according to the present invention allows to efficiently separating and removing Zn and Pb from the starting materials comprising Fe and possibly C, while the use of a certain amount of MnO₂ as (part of the) oxidizing agent in step a) provides the advantages of a more stable reaction regarding process control with less pH fluctuation and with easier pH stabilization. It furthermore efficiently reduces or even prevents the formation and the liberation of Cl₂ during the leaching step and it also surprisingly reduces or even prevents the formation and the liberation of HCN (for further details see below). MnO₂ limits also the dissolution in the liquid phase of the iron located in the starting material, leading to a better iron recovery yield. Thus the use of MnO₂ limits the formation of Fe II in the solution, Fe being mainly under Fe III form. The term "starting materials" refers to materials before being submitted to the process. According to one embodiment, the starting materials to be treated also comprise C in addition to Zn, Pb and Fe. The starting materials to be treated may be industrial wastes, such as but not limited to blast furnace sludge, blast furnace dusts, BOF (basic oxygen furnace) sludge or BOF dusts. The Zn and Pb containing starting materials to be treated can be generated by mining, metallurgical, chemical, painting and textile industries and can be for example ash, dross, dust, sludge or residue. The removal of Zn and Pb is particularly desirable for starting materials such as for example blast furnace sludge and blast furnace dusts. One of the aspects of the present invention is to recover materials after treatment comprising iron and possibly carbon essentially free of zinc and lead rather than extracting completely pure zinc and lead.

The process according to the present invention allows recycling the blast furnace sludge or dusts. However, although the process according to the present invention is particularly adapted, it is not only limited to the treatment of the blast furnace sludge or dusts.

The term "the solid" or the term "Fe by-product" refers to the treated materials obtained after steps b) and c), namely the materials obtained after being submitted to the treatment and wherein Zn and Pb have been removed.

The term "the solid residues" or the term "Zn by-product", refers to the residues of at least Zn and Pb which are recovered in solid form after steps e) and f) and which come from the starting materials.

According to one embodiment, the starting materials to be treated comprise about:
- from 1 to 55 wt-% of Fe,
- from 0 to 65 wt-% of C,
- from 0,01 to 30 wt-% of Zn,
- from 0,01 to 5 wt-% of Pb,
based on the total weight of the starting materials.
These starting materials may also comprise one or several additional element(s) such as Mn, Al, Ti, S, Si, P, Ca, Mg, Na, K, Cl, Ni, Cu and any combination thereof.

According to a specific embodiment, when the starting materials to be treated are blast furnace sludge, blast furnace dusts, BOF (basic oxygen furnace) sludge or BOF dusts, typical compositions may be for example (wt-%):

| **Blast Furnace sludge** | | |
|---|---|---|
| | Minimum | Maximum |
| **C** | 6% | 50,9% |
| **Fe** | 17,0% | 60.0% |
| **Pb** | 0,1% | 0,7% |
| **Zn** | 1.0% | 15,4% |
| **MnO** | 0,0% | 1% |
| **Al₂O₃** | 1.7% | 5.2% |
| **Ti** | 0,0% | 0,1% |
| **S** | 0,2% | 3.1% |
| **SiO₂** | 2.0% | 10.0% |
| **P** | 0.0% | 0.5% |
| **CaO** | 1.5% | 8.3% |
| **MgO** | 0,3% | 1,8% |
| ***Na+K*** | 0.1% | 5,7% |

| **Basic Oxygen Furnace (BOF) dust** | | |
|---|---|---|
| | Minimum | Maximum |
| **C** | 0.9% | 11,1% |
| **Fe** | 20.0% | 56.00% |
| **Pb** | 0.1% | 0.6% |
| **Zn** | 0.1% | 9.2% |
| **MnO** | 0.0% | 5.3% |
| **Al₂O₃** | 0.1% | 2.0% |
| **Ti** | 0,0% | 0.1% |
| **S** | 0,20% | 0,70% |
| **SiO₂** | 0,20% | 5.0% |
| **P** | 0% | 0.1% |
| **CaO** | 2.5% | 44.4% |
| **MgO** | 0.7% | 16.6% |
| ***Na+K*** | 0.1% | 1.3% |

The process according to the present invention allows for efficiently separating Zn and Pb from a ferrous matrix and significantly reducing the amounts of Zn and Pb in the starting material in order to recover materials after treatment (the Fe by-product) which can be for example recycled in a sinter plant and blast furnace or in all pyrometallurgical furnace which value iron such as electrical arc furnace (EAF), cupola furnace, oxycup furnace, submerged arc furnace (SAF), plasma furnace, rotary hearth furnace, etc ...

Indeed, the first step of the process concerns a selective leaching step of the Zn and Pb among the other compounds present in the starting materials.

This leaching is reached by mixing the starting materials with hydrochloric acid (HCl) and an oxidizing agent in one or several reactor(s) and by applying the following parameters:
- a temperature superior or equal to 35°C,
- a pH comprised between 0,5 and 3,5.

These leaching conditions promote the leaching and the solubilization of Zn and Pb compared of the other compounds (metals). However, these leaching conditions prevent (but do not completely avoid) the leaching and the solubilization of other metals such as Fe (or Mn). The fact to not completely avoid the precipitation of Fe allows reducing the radioactivity of the solid residues comprising Zn and Pb obtained at the end of the process. Indeed, lead may be a radioactive compound, in particular the isotope Pb²¹⁰. This radioactivity will be concentrated from the starting material to the solid residues, namely the Zn by-product. The handling and transport of the Zn by-product containing high concentration of radioactive lead may represent a risk for the environment and is submitted to restrictive safety regulations. The presence of a quantity of iron (or other compounds such as Mn) in the solid residues obtained according to the present invention results in the reduction of the radioactivity since the concentration of radioactive lead decreases. The solid residues (Zn by-product) of zinc and lead obtained may thus be easily transported and recycled by other metallurgical industries such as zinc smelter or by other zinc bearing residues recycling technologies (Waelz kiln technology, plasma torches furnace...).

The use of HCl enables to leach the metals under the oxide form. Furthermore, when developing the present process, the inventors noted that the use of HCl allows dissolving Pb in the liquid phase under PbCl₂ form contrary to the use of sulfuric acid which forms an insoluble compound PbSO₄. According to a preferred embodiment, the quantity of HCl to be used depends on the initial zinc, lead and iron content. The pH is controlled to be preferably comprised from 0,5 to 3,5 in order to be sure that zinc and lead go in solution. Depending on the element which goes in solution, the quantity of HCl may vary. HCl addition is conditional to the target pH and to the Zn, Pb, Fe amounts which go in solution.

The oxidizing agent reacts with the metal elements under metallic and sulfur forms in order to form metallic ions which are soluble in hydrochloric acid.

The oxidizing agent comprises manganese dioxide, which preferably represents 10 to 100 wt-%, more preferably 20 to 80 wt-%, most preferably 25 to 50 wt-% of the oxidizing agent in step a).

Advantageously, the further oxidizing agent (if any) is selected from the group consisting of:
- air, oxygen (O₂), ozone (O₃), O₂ enriched air,
- chlorine (Cl₂), hypochlorite (ClO⁻), chlorite (ClO₂⁻), chlorine dioxide (ClO₂), chlorate (ClO₃⁻), perchlorate (ClO₄⁻),
- bromine,
- potassium permanganate (KMnO₄),
- nitric acid (HNO₃),
- dichromic acid (H₂CrO₄),
- hydrogen peroxide
- and any combination thereof.

Preferably, the further oxidizing agent (if any) of step a) is chosen among: O₂, air, O₂ enriched air or any combination thereof.

The use of this kind of oxidizing agent(s) is economic and avoids the implementation of complicated and expensive equipment.

Advantageously, the molar ratio of oxidizing agent content regarding Zn content (n oxidizing agent(s)/n Zn) is comprised from 0 to 10, preferably from 0,1 to 5. In the formula, "n oxidizing agent(s)" refers to the active element(s) of the oxidizing compound(s).

When developing the present process, it has been observed that the use of MnO₂ as (part of the) oxidizing agent in step a) results in a more stable reaction regarding process control with less pH fluctuation and with easier pH stabilization. This is an advantage for the implementation of the process. Furthermore, the use of MnO₂ as an oxidizing agent prevents the formation and the liberation of Cl₂ during the leaching step which could be a threat for the safety of the staff present on site. Surprisingly, the use of MnO₂ also prevents the formation and the liberation of HCN which could be formed from the starting materials coming from the blast furnace for example. MnO₂ enables to oxidize cyanide ion into a more stable and non-pollutant form. This corresponds to a major advantage for the implementation of the process since less restrictive safety measures have to be observed by the staff in view of a possible liberation of toxic gases such as HCN. In addition, MnO₂ is converted into Mn²⁺ by a reduction reaction. The presence of Mn²⁺ allows catalyzing the oxidation of H₂S and SO₂ into S₂O₃, SO₃²⁻ or SO₄²⁻. Preferably, the oxidizing agent is a mixture of MnO₂ and air, MnO₂ and O₂ enriched air or MnO₂ and O₂ MnO₂ limits also the loss of iron into the filtrate. Nevertheless, the soluble iron is mainly under Fe III form.

As already mentioned, in order to leach out most of Zn and Pb, the reaction conditions have preferably to be controlled. The pH of the leaching step may be between 0,5 and 3,5. Preferably the pH is superior to 1 in order to prevent leaching of the possibly present silica in the starting materials and which may lead to the formation of a gel difficult to filter. Advantageously, the pH may be comprised from 0,8 to 2,8 and more preferably from 1 to 2,6.

The temperature may be equal or superior to 35°C. Preferably, the temperature of the leaching reaction may be higher than 50°C in order to prevent the crystallization of the PbCl₂ formed in the mixture. In order to work preferably at atmospheric pressure, the leaching reaction may be carried out at a temperature equal or inferior to 100°C. Advantageously, the temperature of the leaching step a) is comprised from 35° to 100°C and preferably from 50 to 70°C. The temperature is the one under atmospheric pressure.

Preferably the leaching step may last at least for 20 minutes. According to one embodiment, the leaching step lasts no more than 120 minutes. Advantageously, the reaction time is comprised from 20 to 120 minutes and preferably from 30 to 90 minutes.

According to a preferred embodiment, the leaching step is conducted in a series of reactors which may for example be working in cascade. This allows to controlling more specifically the pH, the oxidation and the temperature of the reaction.

At the end of the leaching step, Zn and Pb are both in soluble form in the liquid phase.

It has to be underlined that a certain (low) quantity of Fe may also be solubilized in the liquid phase.

According to an embodiment of the present invention, the precipitation of Fe after the leaching step a) may be desirable in order to recover most of the Fe amount in the materials after treatment. This can be particularly interesting when the starting materials to be treated do not comprise radioactive lead (Pb²¹⁰). As a result, it is not useful to decrease the concentration of Pb with addition of Fe in solid residues of Pb and Zn. This step corresponds to a selective precipitation of iron a'). This optional step a') could be performed after the leaching step a) and before the filtration step b). If the step is performed, it is important to have a good iron precipitation yield without co-precipitating Zn and Pb. Thus, iron must be under Fe III form in order to precipitate under a pH value where Zn and Pb remain in solution.

Thus, this step a') comprises the injection of an oxidizing agent and the addition of a neutralizing agent. The oxidizing agent in step a') may be selected in the group consisting of:
- air, oxygen (O₂), ozone (O₃),O₂ enriched air,
- chlorine (Cl₂), hypochlorite (ClO⁻), chlorite (ClO₂⁻), chlorine dioxide (ClO₂), chlorate (ClO₃⁻), perchlorate (ClO₄⁻),
- bromine,
- manganese dioxide (MnO₂), potassium permanganate (KMnO₄),
- nitric acid (HNO₃),
- dichromic acid (H₂CrO₄),
- hydrogen peroxide
- and any combination thereof.

The oxidizing agent used in step a') can be either identical or different from the one used in step a). Preferably, the oxidizing agent at step a') is MnO₂, O₂, oxygen or O₂ enriched air.

Fe under Fe II form is oxidized into Fe III form due to the contact with the oxidizing agent (oxygen, air and/or O₂ enriched air). The addition of the neutralizing agent leads to the precipitation of Fe under a mix between iron hydroxide Fe(OH)₃ and goethite form FeOOH. At this stage, the temperature is preferably maintained at the same level as described in the leaching step, namely higher than 35°C and more preferably superior to 50°C in order to avoid the crystallization of PbCl₂. The reaction takes place preferably in a series of reactors installed in cascade and equipped with mixer in order to favor the mixing and the contact with the product and the chemical agents.

The neutralizing agent may be chosen among:
- lime (CaO), hydrated lime (Ca(OH)₂), limestone (CaCO₃), milk of lime, milk of limestone,
- caustic soda (NaOH), potassium hydroxide (KOH),
- sodium carbonate (Na₂CO₃),
- BOF slag,
- the starting materials or any combination thereof.

BOF slag is a steel making plant residue composed by a high fraction of free CaO (between 40-60% CaO). This slag cannot be used for road construction because of it instability due to the hydration of CaO into Ca(OH)₂ which blow in contact with water. Nevertheless, it could be a good and non-expensive neutralization agent for the process.

The starting materials before being submitted to the treatment have also a neutralization potential because the leaching of Zn, Pb and part of Fe consume acidity and increase the pH. Thus, the starting materials themselves may be used as a neutralizing agent.

The neutralizing agent used in step a') can be either identical or different from the one used in step e). Advantageously, the neutralizing agent at step a') is milk of lime and/or limestone. The neutralizing agent increases the pH. At the end of the optional step a'), the pH may be between 1.8 and 3,5. In this condition only Fe III is precipitating. Zn and Pb are remaining in the liquid phase.

A filtration step b) is then performed by causing the mixture to pass through a filter for example by pumping the mixture through the filter. The filter can be a filter press working in batch mode or a vacuum belt filter working continuously. The filtration step enables to separate the solid from the liquid phase. If filter press is used, the liquid leaves by hydraulic compaction the solid through filter clothes located on plates. If vacuum filter press is used, a vacuum pump is sucking the liquid through a belt cloth. The solid and the filtrate corresponding to the liquid phase of the mixture are thus separated. The filtrate comprises chloride, Zn, Pb and possibly other solubilized compounds (such as metallic compounds). These other solubilized compounds in the filtrate may be for example Fe and Mn. In particular, solubilized Mn will be present as at least some MnO₂ has been used as oxidizing agent.

Then, the solid (or Fe by-product) is submitted to a washing step c) in order to evacuate most of the remaining soluble compounds as for example the salts which were comprised in the filtrate (mainly chloride). Preferably, this washing step is performed on filter to directly separate the washing water from the solid. Advantageously, the washing step is performed with hot water, in particular with water at a temperature superior or equal to 35°C and preferably superior or equal to 50°C in order to prevent the crystallization of solubilized PbCl₂.

The solid obtained after the filtration step b) and the washing step c) constitute the treated materials, also named the Fe by-product. The treated materials correspond to the materials obtained after the treatment namely after the removal of Zn and Pb. The treated materials comprise at least Fe (and possibly C). The treated materials may comprise less than 0,5 wt-% of Zn and preferably less than 0,3 wt% of Zn and more preferably less than 0,25 wt-% of Zn compared to the total weight of the treated materials. The treated materials may comprise less than 0,15 wt-% of Pb and preferably less than 0,1 wt-% of Pb and more preferably less than 0,08 wt-% of Pb compared to the total weight of the treated materials.

The rate of removal efficiency of Zn generally is superior or equal to 90 % and the rate of removal efficiency of Pb may be superior or equal to 90 %.

Although, most of the quantity of chloride can be found in the filtrate and the washing water, chloride may also be detected in the treated materials, namely Fe by-product (the solid obtained after steps b) and c)). Preferably, the treated materials comprise less than 1 wt-% of Cl and more preferably less than 0,5 wt-% of Cl.

According to a preferred embodiment of the present invention, the treated materials (namely Fe by-product) preferably comprise:
- from 0,9 to 60 wt-% of Fe,
- from 0 to 70 wt-% of C,
- less than 0.3 wt-% of Zn, preferably from 0,009 to less than 0,3 wt-% of Zn,
- less than 0,1 wt-% of Pb, preferably from 0,009 to less than 0,1 wt-% of Pb, and
- less than 1 wt-% of Cl, preferably from 0,1 to less than 1 wt-% of Cl, compared to the total weight of the treated materials (Fe by-product).

Another aspect of the invention concerns the materials obtained after the treatment (Fe-by-product). Indeed, these treated materials comprise a significantly reduced amount of Zn and Pb and thus can be recycled in a sinter plant and blast furnace or in all pyrometallurgical furnace which value iron such as electrical arc furnace (EAF), cupola furnace, oxycup furnace, submerged arc furnace (SAF), a plasma furnace, rotary hearth furnace ...

In addition to reduce the amounts of Zn and Pb in starting materials comprising Fe, the present invention also allows easily recovering Zn and Pb in a solid form. This can be attractive because Zn and Pb can be recycled for example in non-ferrous industry.

As a result, the process allows simultaneously decontaminating starting materials such as for example blast furnace sludge or BOF dusts and recovering the contaminants in a recyclable form.

After the leaching step a), both Zn and Pb are in soluble form. Zn and Pb can be found either in the filtrate of step b) or possibly in the washing water of step c).

The process comprises the step d) of recovering the filtrate of step b) and the washing water of step c) in a reactor. The filtrate and the washing water have been separated from the solid (also named Fe by-product) previously obtained which correspond to the treated materials. The resulting liquid (mixture of filtrate of step b) and washing water of step c)) comprises chloride, Zn, Pb and possibly other compounds (such as other metals) in soluble form. These other possible metallic compounds may correspond in particular to Fe and Mn. The presence of Mn is due (at least) to the fact that MnO₂ has been used as oxidizing agent. The presence of Fe may derive from the solubilization of part of the ferrous coming from the starting materials during the leaching step a).

Then, solubilized Zn, Pb and the other possible compounds (such as metals) present in the recovered filtrate and the washing water are precipitated into solid residues by mixing with a neutralizing agent in a reactor. The addition of the neutralization agent is depending on the initial pH, the final pH to be reached and the quantity of zinc, lead and iron which is in solution. By precipitating, Fe, Zn and Pb consume part of the neutralization agent added. The objective of the precipitation of step e) is to recover zinc and lead solid residues, namely Zn by-product, formed by the solubilized Zn and Pb and the other possible compounds (metals such as Fe and Mn) present in the filtrate and in the washing water. The solid residues (Zn by-product) contain the recovered contaminants (and possibly other metals) under solid form. The reaction takes place preferably in a series of agitated reactors working in cascade in order to better control the increase of the pH by the neutralization agent. The temperature of the reaction may be equal or superior to 35 °C. Preferably the reaction temperature may be higher than 50 °C in order to avoid the crystallization of PbCl₂ and to limit Cl content in the Zn/Pb solid residues. The reaction time takes at least 15 min and preferably between 30 and 60 min.

The addition of the neutralizing agent increases the pH of the mixture of the filtrate obtained at step b) and the washing water obtained at step c), during the precipitation step e). After the addition of the neutralizing agent, the pH may be between 7 and 12 and preferably between 8 and 11. The increase of the pH leads to the precipitation of the solubilized metals (Zn, Pb, and possibly Fe and Mn).

The neutralizing agent of step e) may be chosen in the group consisting of:
- lime (CaO), hydrated lime (Ca(OH)₂), limestone (CaCO₃), milk lime, milk of limestone,
- caustic Soda (NaOH), potassium hydroxide (KOH),
- sodium carbonate (Na₂CO₃),
- BOF slag (due to high free CaO content),
- the starting materials
- and any combination thereof.

The neutralizing agent used in step e) may be identical or different from the one used during the optional step a').

Zn, Pb and the other compounds possibly present, such as Fe and Mn, may be either precipitated under hydroxide form or under carbonate forms depending on the neutralizing agent used.

For example when using lime, hydrated lime, milk of lime, caustic soda, potassium hydroxide, the metals (Zn, Pb and possibly Fe and Mn) are precipitated under hydroxide form.

In those cases where the neutralizing agent is either the limestone, milk of limestone or sodium carbonate, the metals (Zn, Pb and possibly Fe and Mn) precipitate under carbonate form.

Advantageously, the neutralizing agent at step e) is milk of lime or milk of limestone or a combination of both.

Again, in order to ensure that all of the dissolved iron is under Fe III form, it is possible to add during the neutralization step e) an injection of O₂, air and/or O₂ enriched air. This would lead to oxidize the entire Fe II form into Fe III form and to precipitate iron hydroxide (Fe(OH)₃). It is important to prevent the precipitation of soluble Fe under Fe(OH)₂ form. Indeed, Fe(OH)₂ forms a gel difficult to settle and to filtrate. The formation of Fe(OH)₂ is due to the presence of Fe under Fe II form instead of Fe III form. Furthermore, as soluble manganese is present, the injection of O₂, air and/or O₂ enriched air promotes also the oxidation of Mn²⁺ into Mn⁴⁺ and then the precipitation as MnO₂.

At the end of the neutralization step e), the metals Zn, Pb and possibly Fe and Mn, if present, precipitate and form solid residues.

Thus, after obtaining the solid residues of metals, a filtration step is performed in order to separate the liquid phase from the solid residues.

Thereafter, the filtered solid residues are washed with water in order to remove the soluble compounds and in particular the salts which were comprised in the filtrate and which are mainly composed by chloride. At this step hot water may be used for washing the solid, but it is not useful because of the precipitation of Pb under hydroxide form. At the end of the filtration step and washing step, a salty liquid phase rich in Cl, namely a salty liquid effluent, is produced.

As a result, solid residues of Zn and Pb, namely the Zn by-product, are obtained with possible Fe and Mn content (as MnO₂ has been used as an oxidizing agent). The solid residues of Pb and Zn (Zn by-product) may be easily recovered and recycled for example to the non-ferrous industry.

All the embodiments previously described may be combined within reason.

### Brief Description of the Drawings

Preferred embodiment of the invention will now be described, by way of an example, with reference to the attached drawings namely:

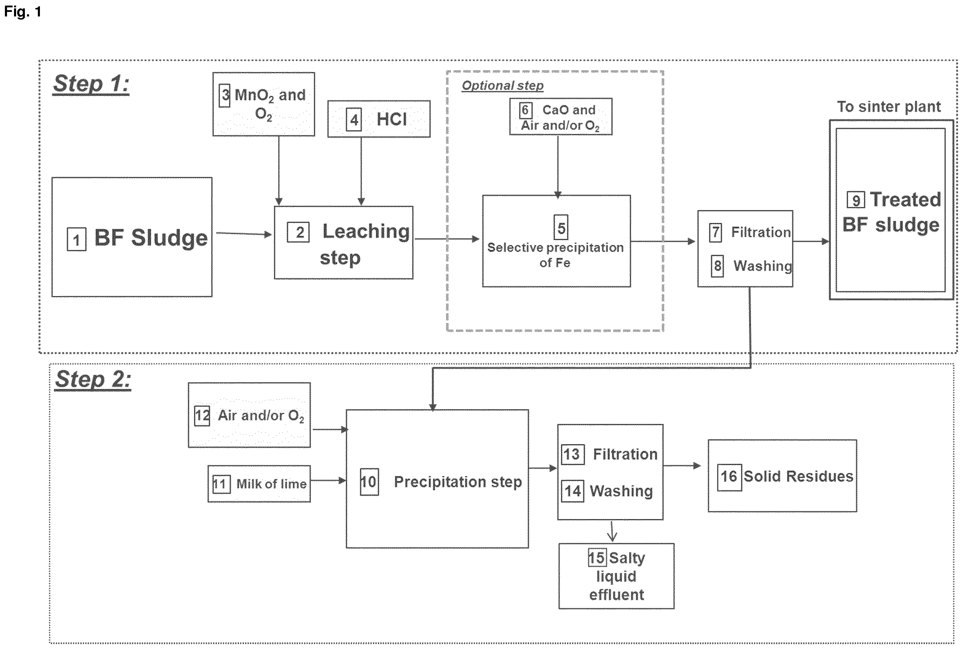

Fig. 1 is a scheme of one embodiment of the process.

### Description of Preferred Embodiments

Fig.1 describes an embodiment of the process according to the present invention. The starting material to be treated is a blast furnace sludge 1 which corresponds in fact to the sludge rejected at the outlet of the gas cleaning plant.

The process can be divided in two major steps: step n°1 corresponding to the treatment of the blast furnace sludge and step n°2 corresponding to the recovering of the solubilized metals.

The treatment of the blast furnace sludge 1 consists in selectively removing the undesirable contaminants from the ferrous matrix namely: Zn and Pb. This is achieved by submitting the blast furnace sludge 1 to a leaching step 2 taking place preferably in a series of agitated reactors working in cascade in order to better control the pH and the addition of the oxidizing agent. The reaction takes place at a temperature of about 55 °C. This leaching step 2 is carried out with the addition of an oxidizing agent which is a mixture of MnO₂ and O₂ 3 and a solution of HCl 4. Preferably, the molar ratio between oxidizing agent (Mn)/Zn is from 0,1 to 5 and the concentration of HCl is adjusted in order to decrease the pH between 1 and 2. The mixture goes by overflowing from reactor to reactor. The leaching step 2 is conducted for 30 to 60 minutes. These conditions allow to promoting the leaching of Zn and Pb compared to the other present metals.

At the end of the leaching step 2, due to the effect of the addition of the oxidizing agent which is a mixture of MnO₂ and O₂ 3 and HCl 4, Zn and Pb are solubilized within the liquid phase under chloride form. Furthermore, Mn coming from MnO₂, is also in solubilized form Mn²⁺ in liquid phase. A limited quantity of Fe may also be solubilized during this leaching step 2.

Regarding Fe, it is preferred to precipitate it under Fe III form. Indeed, the precipitation of Fe II is done at a pH value which induces the co-precipitation of Zn and Pb. That is why, in order to keep Zn and Pb in solution, Fe has to be precipitated under Fe III, which have a precipitation pH lower than the precipitation of Zn and Pb in such chloride media.. As a result, an optional step corresponding to the selective precipitation of Fe 5 may be implemented. This selective precipitation of Fe 5 consists in the addition of a neutralizing agent which is CaO and the injection of air and/or O₂ 6 in the mixture. The addition of air and/or O₂ and CaO 6 leads to the oxidation and the precipitation of Fe under a mixture of goethite form FeOOH and hydroxide form Fe(OH)₃.

Then, a filtration step 7 is implemented in order to separate the liquid phase from the solid. The liquid phase corresponding to the filtrate comprises solubilized salts of Zn, Pb, Fe, Mn and chloride. The solid comprises Fe, C, and only few traces of Zn, Pb and Cl. The filtration step 7 is implemented by using a filter press or vacuum belt filter where liquids are removed from the solid. In case of using filter press, a storage pulp tank and a filtrate storage reactor may be preferably foreseen before and after the filter press in order to assure a continuous process because of the batch mode of the filter press. The filtered solid, which forms a cake, is then submitted to a washing step 8 with water on the filter in order to remove the remaining impregnated salts, namely the salts which were comprised in the filtrate. Preferably the washing step 8 is carried out with hot water having a temperature superior or equal to 35 °C and more preferably superior or equal to 50 °C. This allows maintaining the lead solubilized in solution and preventing the crystallization of PbCl₂ in the treated blast furnace sludge 9 (corresponding to Fe by-product).

At the end of step n°1, the treated blast furnace sludge 9 comprising about less than 0,3 wt-% of Zn less than 0,1 wt-% of Pb and less than 1 wt-% of Cl is obtained. This treated blast furnace sludge 9 can be directly recycled for use, for example, in sinter plant.

Step n°2 corresponding to the recovering of the solubilized metals is preferably implemented in another series of agitated reactor in order to better control the pH. The filtrate and the washing water are recovered at the end of step n°1 and put into a reactor. This mixture goes by overflowing from reactor to reactor. In order to achieve the precipitation of the solubilized metals (Zn, Pb, Fe and Mn), the pH of the liquid mixture is increased preferably until 8. This is achieved by the precipitation step 10 which consists in the addition of a neutralizing agent such as milk of lime (Ca(OH)₂) 11 in order to reach a pH preferably between 8 and 9. During the precipitation step 10, it should be preferably ensured that dissolved iron is under Fe III form and not Fe II form in order to prevent the formation of a gel when Fe precipitates under Fe(OH)₂ form. Thus, an oxidizing agent and preferably a mixture of air and/or O₂ 12 is injected within the reactor during the neutralization step.

At the end of the precipitation step 10, the metals Zn, Pb, Fe precipitate under hydroxide form whereas solubilized manganese is oxidized from Mn²⁺ to Mn⁴⁺ due to the effect of the injection of air and/or O₂ 12 and thus precipitates under MnO₂ form.

The precipitate is then separated from the liquid phase through a filtration step 13. This filtration step 13 is preferably performed with a filter press working in batch mode. In order to assure the continuous flow of the process, storage reactor before and after the filter may be foreseen. The filtered precipitate is thereafter submitted to a washing on the filter step 14 with water in order to remove the impregnated salts mainly composed by chloride. At the end of the filtration step 13 and washing step 14, a salty liquid effluent 15 with a concentration from about 30 to 40 g/l of Cl is produced.

The filtered precipitate corresponds to solid residues 16 (namely Zn by-product) of Fe, Zn, Pb and Mn.

These solid residues can be recycled e.g. in non-ferrous industry.

Example: For treating 1 ton of blast furnace sludge with a composition of Fe 25 %, C 45 %, Zn 3,5 % and Pb 0,5 %, 0,50 ton of HCl 32% may be added in order to reach a pH about ∼1,5 and a quantity of manganese (IV) with a molar ratio between Mn/Zn of about 0,6. At the end of step n°1, about 0,9 ton of treated blast furnace sludge (Fe by-product), which forms a cake, comprising about 26 wt-% of Fe, 50 wt-% of C, less than 0,3 wt-% of Zn, less than 0,1 wt-% of Pb and less than 0,5 wt-% of Cl is obtained. This content of Cl is obtained with a washing on filter press with a quantity of water of 1-2 l/kg of Fe/C. The quantity of solution recovered is ∼4 m³ (filtrate + washing water).

In order to recover the solubilized metals, the solution of filtrate and washing water is then submitted to a precipitation step. The quantity of milk lime 25 % used to reach pH ∼9 and to precipitate all the metals solubilized in the solution (filtrate and washing water) is preferably around 720 kg. The resulting mixture is then filtrated and washed with a quantity of water of 1-2 l/kg of Zn/Pb sludge. The filtered precipitate corresponds to solid residues (Zn by-product) of Fe, Zn, Pb and Mn. In particular, about 0,15 ton which comprises about 9 wt-% Fe, 20 wt-% Zn and 3 wt-% Pb is recovered. At the end of the filtration and washing step, about ∼5 m³ of salty liquid effluent with a concentration of about 30 g/l of Cl is produced.

**Legend:**
- 1: Blast furnace sludge
- 2: Leaching step
- 3: Addition of a mixture of MnO₂ and O₂
- 4: Addition of a solution of HCl
- 5: Selective precipitation of Fe
- 6: Addition of CaO and injection of air and/or O₂
- 7: Filtration step
- 8: Washing step
- 9: Treated blast furnace sludge
- 10: Precipitation step
- 11: Addition of milk of lime
- 12: Injection of air and/or O₂
- 13: Filtration step
- 14: Washing step
- 15: Salty liquid effluent
- 16: Solid residues

## Claims

1. A process for reducing the amounts of zinc and lead in starting materials comprising iron, which comprises the steps of:
a) selectively leaching Zn and Pb comprised in the starting materials by mixing the starting materials with hydrochloric acid and an oxidizing agent in one or several reactor(s) at a temperature superior or equal to 35°C and at a pH comprised between 0,5 and 3,5,
b) filtrating the mixture obtained in order to separate the solid and the filtrate,
c) washing the solid with water, the resulting solid comprising mainly Fe and a reduced amount of Zn and Pb compared to the original starting materials,
d) recovering the filtrate of step b) and the washing water of step c) which comprise chloride, solubilized Zn and Pb in one or several reactor(s),
e) precipitating solubilized Zn, Pb in the recovered filtrate and the washing water by mixing with a neutralizing agent,
f) filtrating and washing the solid residues obtained in step e) in order to remove the chloride in solution from the solid residues which comprise at least Pb and Zn,
**characterized in that** the oxidizing agent of step a) comprises at least 5 wt-% of manganese dioxide, preferably in combination with one or more further oxidizing agents.

2. The process according to claim 1, wherein manganese dioxide represents 10 to 100 wt-%, preferably 20 to 80 wt-%, most preferably 25 to 50 wt-% of the total amount of oxidizing agent(s) in step a).

3. The process according to claim 1 or 2, wherein the further oxidizing agent(s) of step a) is/are selected from the group consisting of:
- air, oxygen, ozone, O₂ enriched air,
- chlorine, hypochlorite, chlorite, chlorine dioxide, chlorate, perchlorate,
- bromine,
- potassium permanganate,
- nitric acid,
- dichromic acid,
- hydrogen peroxide
- and any combination thereof.

4. The process according to any of the preceding claims, wherein the further oxidizing agent(s) is/are selected from the group consisting of air, O₂ enriched air and O₂

5. The process according to any of the preceding claims, wherein the starting materials before the treatment comprise:
- from 1 to 55 wt-% of Fe,
- from 0 to 65 wt-% of C,
- from 0,01 to 30 wt-% of Zn, and
- from 0,01 to 5 wt-% of Pb, based on the total weight of the starting materials.

6. The process according to any of the preceding claims, wherein the treated materials comprise:
- from 0.9 to 60 wt-% of Fe,
- from 0 to 70 wt-% of C,
- less than 0,3 wt-% of Zn,
- less than 0,1 wt-% of Pb, and
- less than 1 wt-% of Cl, based on the total weight of the treated materials.

7. The process according to any of the preceding claims, wherein the starting materials further comprise carbon.

8. The process according to any of the preceding claims, wherein the leaching step a) is performed in a series of reactors.

9. The process according to any of the preceding claims, wherein the neutralizing agent of step e) is selected from the group consisting of:
- lime, hydrated lime, limestone, milk of lime, milk of limestone,
- caustic soda, potassium hydroxide,
- sodium carbonate,
- BOF slag,
- the starting materials,
and any combination thereof.

10. The process according to any of the preceding claims, wherein it comprises an additional step a') between the steps a) and b) which consists in a selective precipitation of iron.

11. The process according to claim 10 wherein the selective precipitation step a') of iron comprises the addition of an oxidizing agent which is selected from the group consisting of:
- air, oxygen, ozone, O₂ enriched air,
- chlorine, hypochlorite, chlorite, chlorine dioxide, chlorate, perchlorate
- bromine,
- manganese dioxide, potassium permanganate,
- nitric acid,
- dichromic acid,
- hydrogen peroxide and any combination thereof,
and the addition of a neutralizing agent which is selected from the group consisting of:
- lime, hydrated lime, limestone, milk of lime, milk of limestone,
- caustic soda, potassium hydroxide,
- sodium carbonate,
- BOF slag,
- the starting materials and any combination thereof,
in the mixture obtained after the leaching step a).

12. The process according to any of the preceding claims, wherein O₂, O₂ enriched air and/or air is (are) injected to the recovered filtrate and washing water during the precipitation step e).

13. The process according to any of the preceding claims, wherein Fe and manganese are solubilized at step a) and precipitated at step e).

14. The process according to any of the preceding claims, wherein the pH at step e) is between 7 and 12.

15. The process according to any of the preceding claims, wherein the starting materials to be treated are blast furnace sludge, blast furnace dust, BOF sludge or BOF dust.

## Patentansprüche

1. Verfahren zur Verminderung der Mengen von Zink und Blei in Eisen enthaltenden Ausgangsstoffen, das die folgenden Schritte umfasst:
a) Selektives Auslaugen von Zn und Pb, die in den Ausgangsstoffen enthalten sind, und zwar durch Mischen der Ausgangsstoffe mit Chlorwasserstoffsäure und einem Oxidationsmittel in einem Reaktor oder mehreren Reaktoren bei einer Temperatur von höher als oder gleich 35 °C und bei einem pH-Wert, der im Bereich zwischen 0,5 und 3,5 enthalten ist;
b) Filtrieren der erhaltenen Mischung, um den Feststoff und das Filtrat zu trennen;
c) Waschen des Feststoffs mit Wasser, wobei der dabei entstehende Feststoff hauptsächlich Fe und, im Vergleich zu den ursprünglichen Ausgangsstoffen, eine verminderte Menge von Zn und Pb enthält;
d) Rückgewinnen des Filtrats von Schritt b) und des Waschwassers von Schritt c), die Chlorid, löslich gemachtes Zn und Pb enthalten, in einem Reaktor oder mehreren Reaktoren;
e) Fällen von löslich gemachtem Zn, Pb in dem rückgewonnenen Filtrat und dem Waschwasser durch Mischen mit einem Neutralisationsmittel;
f) Filtrieren und Waschen der in Schritt e) erhaltenen Feststoffrückstände, um das in Lösung befindliche Chlorid von den Feststoffrückständen, die mindestens Pb und Zn enthalten, zu entfernen;
**dadurch gekennzeichnet, dass** das Oxidationsmittel von Schritt a) mindestens 5 Gew.-% Mangandioxid, vorzugsweise in Kombination mit einem oder mehreren weiteren Oxidationsmitteln, umfasst.

2. Verfahren nach Anspruch 1, wobei Mangandioxid 10 bis 100 Gew.-%, vorzugsweise 20 bis 80 Gew.-%, am meisten bevorzugt 25 bis 50 Gew.-% der Gesamtmenge des Oxidationsmittels/der Oxidationsmittel in Schritt a) ausmacht.

3. Verfahren nach Anspruch 1 oder 2, wobei das (die) weitere(n) Oxidationsmittel von Schritt a) ausgewählt ist (sind) aus der Gruppe, bestehend aus:
- Luft, Sauerstoff, Trisauerstoff, O₂-angereicherter Luft;
- Chlor, Hypochlorit, Chlorit, Chlordioxid, Chlorat, Perchlorat;
- Brom;
- Kaliumpermanganat;
- Salpetersäure;
- Dichromsäure;
- Wasserstoffperoxid;
- und jeder Kombination davon.

4. Verfahren nach einem der vorhergehenden Ansprüche, wobei das (die) weitere(n) Oxidationsmittel ausgewählt ist (sind) aus der Gruppe, bestehend aus Luft, O₂-angereicherter Luft und O₂

5. Verfahren nach einem der vorhergehenden Ansprüche, wobei die Ausgangsstoffe vor der Behandlung Folgendes umfassen:
- 1 bis 55 Gew.-% Fe;
- 0 bis 65 Gew.-% C;
- 0,01 bis 30 Gew.-% Zn; und
- 0,01 bis 5 Gew.-% Pb, bezogen auf das Gesamtgewicht der Ausgangsstoffe.

6. Verfahren nach einem der vorhergehenden Ansprüche, wobei die behandelten Stoffe Folgendes umfassen:
- 0,9 bis 60 Gew.-% Fe;
- 0 bis 70 Gew.-% C;
- weniger als 0,3 Gew.-% Zn;
- weniger als 0,1 Gew.-% Pb; und
- weniger als 1 Gew.-% Cl, bezogen auf das Gesamtgewicht der behandelten Stoffe.

7. Verfahren nach einem der vorhergehenden Ansprüche, wobei die Ausgangsstoffe außerdem Kohlenstoff umfassen.

8. Verfahren nach einem der vorhergehenden Ansprüche, wobei der Auslaugungsschritt a) in einer Reihe von Reaktoren durchgeführt wird.

9. Verfahren nach einem der vorhergehenden Ansprüche, wobei das Neutralisationsmittel von Schritt e) ausgewählt wird aus der Gruppe, bestehend aus:
- Kalk, Löschkalk, Kalkstein, Kalkmilch, Kalksteinmilch;
- Natriumhydroxid, Kaliumhydroxid;
- Natriumcarbonat;
- Sauerstoff-Aufblas-Konverterschlacke;
- den Ausgangsstoffen; und jeder Kombination davon.

10. Verfahren nach einem der vorhergehenden Ansprüche, wobei es einen zusätzlichen Schritt a') zwischen den Schritten a) und b) umfasst, der in einer selektiven Fällung von Eisen besteht.

11. Verfahren nach Anspruch 10, wobei der Schritt a') zur selektiven Fällung von Eisen die Zugabe eines Oxidationsmittels umfasst, das ausgewählt ist aus der Gruppe, bestehend aus:
- Luft, Sauerstoff, Trisauerstoff, O₂-angereicherter Luft;
- Chlor, Hypochlorit, Chlorit, Chlordioxid, Chlorat, Perchlorat;
- Brom;
- Mangandioxid, Kaliumpermanganat;
- Salpetersäure;
- Dichromsäure;
- Wasserstoffperoxid und jeder Kombination davon;
sowie die Zugabe eines Neutralisationsmittels, das ausgewählt ist aus der Gruppe, bestehend aus:
- Kalk, Löschkalk, Kalkstein, Kalkmilch, Kalksteinmilch;
- Natriumhydroxid, Kaliumhydroxid;
- Natriumcarbonat;
- Sauerstoff-Aufblas-Konverterschlacke;
- den Ausgangsstoffen und jeder Kombination davon, in die nach dem Auslaugungsschritt a) erhaltene Mischung.

12. Verfahren nach einem der vorhergehenden Ansprüche, wobei O₂, O₂-angereicherte Luft und/oder Luft während des Fällungsschritt e) in das rückgewonnene Filtrat und Waschwasser eingeblasen werden.

13. Verfahren nach einem der vorhergehenden Ansprüche, wobei Fe und Mangan bei Schritt a) löslich gemacht und bei Schritt e) gefällt werden.

14. Verfahren nach einem der vorhergehenden Ansprüche, wobei der pH-Wert bei Schritt e) zwischen 7 und 12 liegt.

15. Verfahren nach einem der vorhergehenden Ansprüche, wobei die zu behandelnden Ausgangsstoffe Hochofenschlamm, Hochofenstaub, Sauerstoff-Aufblas-Konverterschlamm oder Sauerstoff-Aufblas-Konverterstaub sind.

## Revendications

1. Procédé de réduction des quantités de zinc et de plomb dans des matières de base comprenant du fer qui comprend les étapes de :
a) lixiviation sélective de Zn et Pb compris dans les matières de base en mélangeant les matières de base avec de l'acide chlorhydrique et un agent oxydant dans un ou plusieurs réacteur(s) à une température supérieure ou égale à 35°C et à un pH compris entre 0,5 et 3,5,
b) filtration du mélange obtenu afin de séparer le solide et le filtrat,
c) lavage du solide avec de l'eau, le solide résultant comprenant essentiellement du Fe et une quantité réduite de Zn et de Pb par rapport aux matières de base d'origine,
d) récupération du filtrat de l'étape b) et de l'eau de lavage de l'étape c) qui comprend des chlorures, du Zn et du Pb solubilisés dans un ou plusieurs réacteur(s),
e) précipitation du Zn, du Pb solubilisés dans le filtrat récupéré et l'eau de lavage en mélangeant avec un agent neutralisant,
f) filtration et lavage des résidus solides obtenus à l'étape e) afin d'éliminer les chlorures en solution des résidus solides qui comprennent au moins du Pb et du Zn,
**caractérisé en ce que** l'agent oxydant de l'étape a) comprend au moins 5 % en poids de dioxyde de manganèse, de préférence en combinaison avec un ou plusieurs autres agents oxydants.

2. Procédé selon la revendication 1, dans lequel le dioxyde de manganèse représente 10 à 100 % en poids, de préférence 20 à 80 % en poids, de manière préférée entre toutes 25 à 50 % en poids de la quantité totale d'agent(s) oxydant(s) à l'étape a).

3. Procédé selon l'une quelconque des revendications précédentes, dans lequel l'autre(les autres) agent(s) oxydant(s) de l'étape a) est/sont choisis parmi le groupe consistant en :
- l'air, l'oxygène, l'ozone, un air enrichi en O₂,
- le chlore, un hypochlorite, un chlorite, un dioxyde de chlore, un chlorate, un perchlorate,
- le brome,
- un permanganate de potassium,
- un acide nitrique,
- un acide dichromique,
- un peroxyde d'hydrogène
- et une quelconque combinaison de ceux-ci.

4. Procédé selon l'une quelconque des revendications précédentes, dans lequel l'autre(les autres) agent(s) oxydant(s) est/sont choisis parmi le groupe consistant en l'air, un air enrichi en O₂, et l'O₂.

5. Procédé selon l'une quelconque des revendications précédentes, dans lequel les matières de base avant le traitement comprennent :
- de 1 à 55% en poids de Fe,
- de 0 à 65% en poids de C,
- de 0,01 à 30% en poids de Zn, et
- de 0,01 à 5% en poids de Pb, sur la base du poids total des matières de base.

6. Procédé selon l'une quelconque des revendications précédentes, dans lequel les matières traitées comprennent :
- de 0,9 à 60% en poids de Fe,
- de 0 à 70% en poids de C,
- moins de 0,3% en poids de Zn,
- moins de 0,1% en poids de Pb, et
- moins de 1% en poids de Cl, sur la base du poids total des matières traitées.

7. Procédé selon l'une quelconque des revendications précédentes, dans lequel les matières de base comprennent en outre du carbone.

8. Procédé selon l'une quelconque des revendications précédentes, dans lequel l'étape de lixiviation a) est mise en oeuvre dans une série de réacteurs.

9. Procédé selon l'une quelconque des revendications précédentes, dans lequel l'agent neutralisant de l'étape e) est choisi parmi le groupe consistant en :
- la chaux, la chaux hydratée, le calcaire, un lait de chaux, un lait de calcaire,
- la soude caustique, un hydroxyde de potassium,
- un carbonate de sodium,
- un laitier BOF,
- les matières de base
et une quelconque combinaison de ceux-ci.

10. Procédé selon l'une quelconque des revendications précédentes, dans lequel il comprend une étape additionnelle a') entre les étapes a) et b) qui consiste en une précipitation sélective de fer.

11. Procédé selon la revendication 10 dans lequel l'étape a') de précipitation sélective de fer comprend l'addition d'un agent oxydant qui est choisi parmi le groupe consistant en :
- l'air, l'oxygène, l'ozone, un air enrichi en O₂,
- le chlore, un hypochlorite, un chlorite, un dioxyde de chlore, un chlorate, un perchlorate,
- le brome,
- un dioxyde de manganèse, un permanganate de potassium,
- un acide nitrique,
- un acide dichromique,
- un peroxyde d'hydrogène et une quelconque combinaison de ceux-ci
et l'addition d'un agent neutralisant qui est choisi parmi le groupe consistant en :
- la chaux, la chaux hydratée, le calcaire, un lait de chaux, un lait de calcaire,
- la soude caustique, un hydroxyde de potassium,
- un carbonate de sodium,
- un laitier BOF,
- les matières de base et une quelconque combinaison de ceux-ci dans le mélange obtenu après l'étape de lixiviation a).

12. Procédé selon l'une quelconque des revendications précédentes, dans lequel de l'O₂, un air enrichi en O₂ et/ou de l'air est/sont injecté(s) dans le filtrat et l'eau de lavage récupérés lors de l'étape de précipitation e).

13. Procédé selon l'une quelconque des revendications précédentes, dans lequel du Fe et du manganèse sont solubilisés à l'étape a) et précipités à l'étape e).

14. Procédé selon l'une quelconque des revendications précédentes, dans lequel le pH à l'étape e) est entre 7 et 12.

15. Procédé selon l'une quelconque des revendications précédentes, dans lequel les matières de base devant être traitées sont des boues de haut-fourneau, des poussières de haut-fourneau, des boues BOF ou des poussières BOF.
